# EUROPEAN PATENT SPECIFICATION

(11) **EP 2 110 394 B1**
(45) Date of publication and mention of the grant of the patent: **24.12.2014**
(21) Application number: 08710981.5
(22) Date of filing: 08.02.2008
(51) Int. Cl.: C08C 19/44, C08F 290/04, C08L 15/00, C08L 19/00

(54) **PHOTOCURABLE LIQUID RUBBER COMPOSITION**
LICHTHÄRTBARE FLÜSSIGKAUTSCHUKZUSAMMENSETZUNG
COMPOSITION DE CAOUTCHOUC LIQUIDE PHOTODURCISSABLE

(30) Priority: 09.02.2007 JP 2007030953
(43) Date of publication of application: 21.10.2009
(73) Proprietor: Bridgestone Corporation, Tokyo 104-8340 (JP)
(72) Inventor: KITANO, Hajime, Kodaira-shi Tokyo 187-8531 (JP); YAMADA, Chikara, Kodaira-shi Tokyo 187-8531 (JP); AKAMA, Shuuyou, Kodaira-shi Tokyo 187-8531 (JP)
(74) Representative: Oxley, Robin John George
(86) International application number: PCT/JP2008/052102
(87) International publication number: WO 2008/096844

(56) References cited:
- EP-A1- 1 953 175
- WO-A1-2006/117156
- GB-A- 2 011 913
- JP-A- 01 056 706
- JP-A- 07 033 837
- JP-A- 50 033 241
- JP-A- 2007 145 949
- JP-A- 2007 283 726
- US-A- 5 283 265

## Description

### TECHNICAL FIELD

The present invention relates to a photocurable liquid rubber composition containing a liquid styrene-butadiene copolymer having, at each end of a molecular chain thereof, a functional group having a photocurable unsaturated hydrocarbon group.

### BACKGROUND ART

In recent years, various photocurable polymer compositions for use as sealing materials and adhesives have been developed.

For example, Patent Reference 1 discloses a polyether-polyol-based photocurable resin for surface-processing of wooden products such as plywood for wood-working, furniture, and musical instruments. However, due to high hydrophilicity and high moisture permeability, polyether-polyol is not suitable for use as a sealing material or a gasket material requiring an excellent barrier property against water vapor.

Patent Reference 2 discloses a polyester-polyol-based photocurable resin composition for coating materials in wood working. However, since a main chain of a polyester moiety in polyester-polyol is degraded by hydrolysis under high-temperature, high-humidity conditions, polyester-polyol is not suitable for use as a sealing material or a gasket material which are exposed to high-temperature, high-humidity conditions.

Polybutadiene-based photocurable resin compositions are known to be a type of material exhibiting improved barrier property against water vapor and improved durability under high-temperature, high-humidity conditions. For example, Patent Reference 3 discloses an adhesive for optical instruments and precision instruments which adhesive employs a liquid polybutadiene (meth)acrylate. The liquid polybutadiene (meth)acrylate is produced from a polymer having a polymer chain obtained by polymerization of butadiene at the 1,2-bond or a hydrogenated polymer chain thereof and having a hydroxyl group in a molecule thereof, by modifying the hydroxyl group with a polymerizable functional group such as an acryloyl group or a methacryloyl group. However, since the 1,2-polybutadiene-based photocurable resin or a hydrogenated product thereof has a low molecular weight, the molecular weight between crosslinking nodes is small, and the crosslinking density increases, which impairs rubber elasticity. Thus, the photocurable resin has high elastic modulus, small elongation, low tensile strength, and poor fatigue resistance. Therefore, practical application of the above adhesive to gaskets, packings, and sealing materials, etc. is difficult due to formation of cracks. In addition, the photocurable resin is a viscous liquid, and the viscosity of the liquid is difficult to control in the case where no organic solvent is used.

Thus, there is demand for a photocurable liquid rubber composition which can be used without solvent, which realizes easy control of the viscosity thereof, and which exhibits high break strength after curing.

WO 2006/117156 discloses a radiation curable urethane (meth)acrylate polymer for use in adhesives.

[Patent Reference 1] Japanese Patent Application Laid-Open No. Heisei 5(1993)-202163
[Patent Reference 2] Japanese Patent Application Laid-Open No. 2000-219714
[Patent Reference 3] Japanese Patent Application Laid-Open No. 2002-371101
[Patent Reference 4] Japanese Patent Application Publication No. Heisei 1(1989)-53681

### DISCLOSURE OF THE INVENTION

Under such circumstances, an object of the present invention is to provide a photocurable liquid rubber composition which can be used without solvent, which realizes easy control of the viscosity thereof, and which exhibits high break strength after curing.

In order to attain the aforementioned object, the present inventors have carried out extensive studies, and have found that the object can be attained through combination of a specific liquid styrene-butadiene copolymer and a specific (meth)acryloyl group-containing monomer. The present invention has been accomplished on the basis of this finding.

Accordingly, the present invention is directed to a photocurable liquid rubber composition as claimed in claim 1.

### Best Modes for Carrying Out the Invention

A characteristic feature of the photocurable liquid rubber composition resides in that the composition comprises a liquid styrene-butadiene copolymer having, at each end of a molecular chain thereof, a functional group having a photocurable unsaturated hydrocarbon group (hereinafter referred to as "photocurable liquid SBR"), a (meth)acryloyl group-containing monomer, and a photopolymerization initiator. The photocurable unsaturated hydrocarbon group is preferably an acryloyl group or a methacryloyl group.

The present invention will next be described in detail, with reference to examples of the method for producing photocurable liquid SBR employed in the photocurable liquid rubber composition of the present invention, as well as specific examples of the functional group having a photocurable unsaturated hydrocarbon group introduced to the copolymer.

In the following reaction schemes A to E, the liquid styrene-butadiene copolymer before modification for forming the photocurable liquid SBR employed in the present invention is abbreviated simply as "SBR." In the present invention, a functional group having a photocurable unsaturated hydrocarbon group is introduced to each end of a molecular chain of SBR. However, for the sake of simplicity of description, introduction of a functional group will be described only by the case of introduction of a functional group to one end of the molecular chain. Needless to say, a functional group can be introduced also to the other end of the molecular chain of SBR. 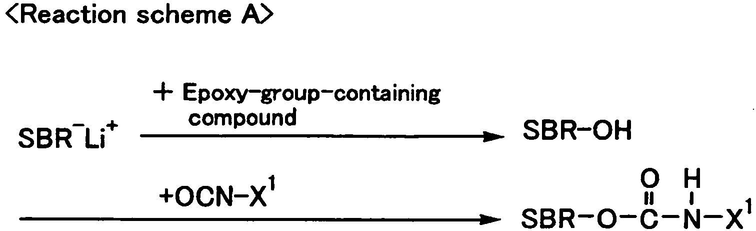 In reaction scheme A, the epoxy-group-containing compound is, for example, an alkylene oxide. Examples of the alkylene oxide include ethylene oxide, propylene oxide, and butylene oxide. X¹ is a (meth)acryloyloxyalkyl group (the alkylene moiety preferably has 1 to 20 carbon atoms, more preferably 1 to 10 carbon atoms). Examples of the (meth)acryloyloxyalkyl isocyanate {OCN-X¹} include 2-acryloyloxyethyl isocyanate, 2-methacryloyloxyethyl isocyanate, 3-acryloyloxypropyl isocyanate, and 3-methacryloyloxypropyl isocyanate.

As shown in the first reaction of reaction scheme A, a living anion of the liquid styrene-butadiene copolymer (unmodified species of the photocurable liquid SBR employed in the present invention) (except in reaction schemes A to E, the "unmodified species of the photocurable liquid SBR" is referred to as "liquid SBR") reacts with an epoxy-group-containing compound (e.g., alkylene oxide), to thereby form a liquid SBR polyol into which a hydroxyl group has been introduced to each end of the molecular chain.

Subsequently, the thus-obtained liquid SBR polyol is dissolved in the solvent mentioned below and reacted with, for example, OCN-X¹, to thereby cause reaction between the end hydroxyl group of the molecular chain of the liquid SBR polyol and a photocurable unsaturated hydrocarbon-group-containing compound. Through this reaction, a (meth)acryloyloxyalkylcarbamoyloxy group {-O-CONH-X¹} (i.e., a functional group having a photocurable unsaturated hydrocarbon group) can be introduced to each end of a molecular chain of liquid SBR.

As used herein, the term "(meth)acryloyl group" refers to an acryloyl group or a methacryloyl group, the term "(meth)acryloyloxyalkyl group" refers to an acryloyloxyalkyl group or a methacryloyloxyalkyl group, and the term "(meth)acrylic acid" refers to acrylic acid or methacrylic acid. 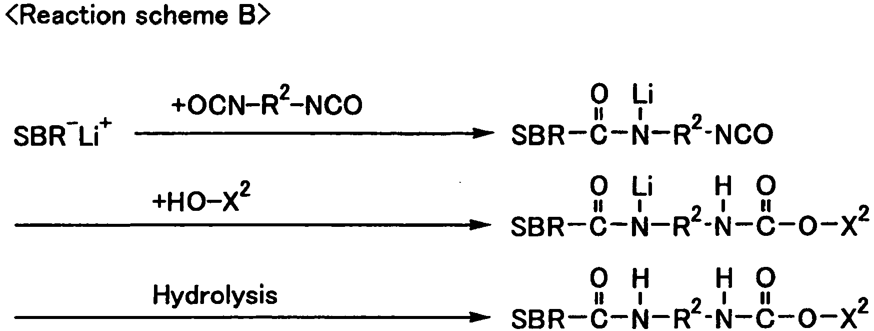 In reaction scheme B, R² is an alkylene group (preferably having 1 to 20 carbon atoms, more preferably 1 to 10 carbon atoms). Examples of the diisocyanate (OCN-R²-NCO) include tolylene diisocyanate (TDI). X² is a (meth)acryloyloxyalkyl group (the alkyl group preferably has 1 to 20 carbon atoms, more preferably 1 to 10 carbon atoms). Specific examples of the hydroxyalkyl (meth)acrylate {HO-X²} include 2-hydroxyethyl methacrylate, 2-hydroxypropyl methacrylate, 4-hydroxybutyl methacrylate, 2-hydroxyethyl acrylate, 2-hydroxypropyl acrylate, and 4-hydroxybutyl acrylate.

As shown in the first reaction of reaction scheme B, a living anion of liquid SBR reacts with a diisocyanate, to thereby form a liquid SBR polyisocyanate into which an isocyanate group has been introduced to each end of the molecular chain.

Subsequently, the thus-obtained liquid SBR polyisocyanate is reacted with, for example, a hydroxyalkyl (meth)acrylate (i.e., a photocurable unsaturated hydrocarbon-group-containing compound), to thereby introduce, to each end of a molecular chain of liquid SBR, a (meth)acryloyloxyalkoxycarbonylaminoalkylcarbamoyl group {-CONH-R²-NHCOO-X²} (i.e., a functional group having a photocurable unsaturated hydrocarbon group). 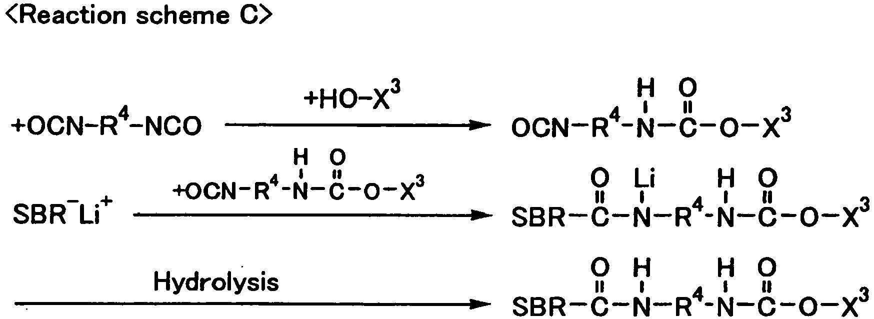 In reaction scheme C, similar to R², R⁴ is an alkylene group (preferably having 1 to 20 carbon atoms, more preferably 1 to 10 carbon atoms). Similar to OCN-R²-NCO, OCN-R⁴-NCO is an diisocyanate. Similar to X², X³ is a (meth)acryloyloxyalkyl group (the alkyl group preferably has 1 to 20 carbon atoms, more preferably 1 to 10 carbon atoms). Similar to HO-X², HO-X³ is a hydroxyalkyl (meth)acrylate.

As shown in the first reaction of reaction scheme C, a living anion of liquid SBR reacts with a (meth)acryloyloxy(alkoxycarbonylamino)alkyl isocyanate {OCN-R⁴-NHCOO-X³}, to thereby introduce, to each end of a molecular chain of liquid SBR, a (meth)acryloyloxyalkoxycarbonylaminoalkylcarbamoyl group {-CONH-R⁴-NHCOO-X³} (i.e., a functional group having a photocurable unsaturated hydrocarbon group). 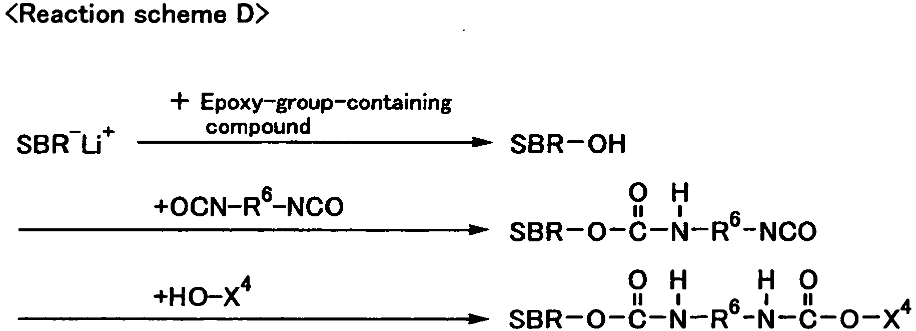 In reaction scheme D, the epoxy-group-containing compound is the same as employed in reaction scheme A, and the diisocyanate and the hydroxyalkyl (meth)acrylate are the same as employed in reaction scheme B.

As shown in the first reaction of reaction scheme D, a living anion of liquid SBR reacts with an epoxy-group-containing compound (e.g., alkylene oxide), to thereby form a liquid SBR polyol into which a hydroxyl group has been introduced to each end of the molecular chain.

Subsequently, the thus-obtained liquid SBR polyol is dissolved in the solvent mentioned below, and the end hydroxyl group of the molecular chain of the liquid SBR polyol is reacted with a diisocyanate, to thereby form a liquid SBR polyisocyanate. Then, the polyisocyanate is reacted with a hydroxyalkyl (meth)acrylate, to thereby introduce, to each end of a molecular chain of liquid SBR, a (meth)acryloyloxyalkoxycarbonylaminoalkylcarbamoyloxy group {-O-CONH-R⁶-NHCOO-X⁴} (i.e., a functional group having a photocurable unsaturated hydrocarbon group). 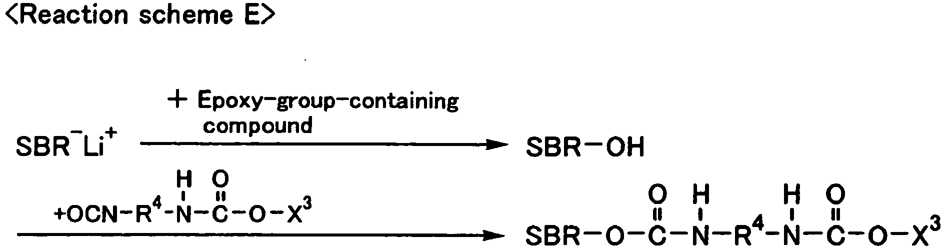 In reaction scheme E, the epoxy-group-containing compound is the same as employed in reaction scheme A or D, and the (meth)acryloyloxy(alkoxycarbonylamino)alkyl isocyanate {OCN-R⁴-NHCOO-X³}, which is produced through reaction between a diisocyanate and a hydroxyalkyl (meth)acrylate, is the same as employed in reaction scheme C.

As shown in the first reaction of reaction scheme E, a living anion of liquid SBR reacts with an epoxy-group-containing compound (e.g., alkylene oxide), to thereby form a liquid SBR polyol into which a hydroxyl group has been introduced to each end of the molecular chain.

Subsequently, the thus-obtained liquid SBR polyol is dissolved in the solvent mentioned below, and the end hydroxyl group of the molecular chain of the liquid SBR polyol is reacted with a (meth)acryloyloxy(alkoxycarbonylamino)alkyl isocyanate, to thereby introduce, to each end of a molecular chain of liquid SBR, a (meth)acryloyloxyalkoxycarbonylaminoalkylcarbamoyloxy group {-O-CONH-R⁶-NHCOO-X⁴} (i.e., a functional group having a photocurable unsaturated hydrocarbon group).

In the aforementioned reaction schemes A to E, a tin-containing catalyst is preferably used in order to efficiently form a urethane bond through reaction between a hydroxyl group and an isocyanate. Examples of the tin-containing catalyst include di-n-butyltin dilaurate (DBTDL).

The liquid SBR employed in the present invention is preferably synthesized through living anionic polymerization in the presence of a dilithium-based initiator.

No particular limitation is imposed on the dilithium-based initiator, and known species thereof may be used. As an example of production of the initiator, Patent Reference 4 discloses reacting a monolithium compound with an aromatic hydrocarbon having a di-substituted vinyl group or an alkenyl group in the presence of a tertiary amine.

Examples of the monolithium compound used in the production of the dilithium-based initiator include ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, and cyclopentyllithium. Among these monolithium compounds, sec-butyllithium is preferred.

Examples of the tertiary amine used in the production of the dilithium-based initiator include lower aliphatic amines such as trimethylamine and triethylamine, and N,N-diphenylmethylamine. Among the above tertiary amines, triethylamine is particularly preferred.

Examples of preferred aromatic hydrocarbons disubstituted with a vinyl group or an alkenyl group include 1,3-(diisopropenyl)benzene, 1,4-(diisopropenyl)benzene, 1,3-bis(1-ethylethenyl)benzene, and 1,4-bis(1-ethylethenyl)benzene.

As the solvent used for the preparation of the dilithium-based initiator and the production of the photocurable liquid SBR, an organic solvent inert to the reaction may be used. A hydrocarbon solvent such as an aliphatic hydrocarbon compound, an alicyclic hydrocarbon compound, and an aromatic hydrocarbon compounds is employed. For example, one or two solvents selected from among n-butane, 1-butane, n-pentane, 1-pentane, cis-2-butene, trans-2-butene, 1-butene, n-hexane, n-heptane, n-octane, 1-octane, methylcyclopentane, cyclopentane, cyclohexane, 1-hexene, 2-hexene, 1-pentene, 2-pentene, benzene, toluene, xylene and ethylbenzene is used. Among these solvents, in general, n-hexane and cyclohexane are used.

When the photocurable liquid SBR of the present invention has a weight average molecular weight of 4,000 or higher, the molecular weight between crosslinking nodes can be increased, to thereby suppress elastic modulus and increase elongation, after photocuring, which is preferred for rubber material. When the molecular weight is 50,000 or less, the viscosity of liquid SBR can be readily regulated, and it is easier to obtain a solvent-free rubber composition. The viscosity of liquid SBR varied greatly depending on the molecular weight of SBR. Therefore, even a small variation in molecular weight causes variation in viscosity. When the aforementioned polymerization method, which can produce liquid SBR having a narrow molecular weight distribution profile, is employed, liquid SBR having a constant molecular weight can be produced at high reproducibiltiy. Thus, a constant viscosity can be obtained. When the molecular weight distribution is 3.0 or less, adverse effects caused by low molecular weight components and high molecular weight components can be suppressed, which is preferred for attaining a constant viscosity.

The (meth)acryloyl group-containing monomer employed in the photocurable liquid rubber composition of the present invention will next be described. The (meth)acryloyl group-containing monomer includes (meth)acrylic acid ester monomers and acryloylmorpholine. As used herein, the term "(meth)acryloyl group-containing monomer" refers to an acryloyl group-containing monomer or a methacryloyl group-containing monomer, and the term "(meth)acrylic acid ester monomer" refers to an acrylic acid ester monomer or a methacrylic acid ester monomer.

The (meth)acryloyl group-containing monomer preferably has a molecular weight smaller than 1,000, more preferably 150 to 600. Examples of the (meth)acrylic acid ester monomer include cyclohexyl (meth)acrylate, dicyclopentanyl (meth)acrylate, dicyclopentenyl (meth)acrylate, dicyclopentenyloxyethyl (meth)acrylate, diethylene glycol monoethyl ether (meth)acrylate, dimethylaminoethyl (meth)acrylate, dipropylene glycol (meth)acrylate, ethoxydiethylene glycol (meth)acrylate, phenyl (meth)acrylate modified with ethoxy group, ethyl (meth)acrylate, isoamyl (meth)acrylate, isobornyl (meth)acrylate, isobutyl (meth)acrylate, isodecyl (meth)acrylate, isooctyl (meth)acrylate, isostearyl (meth)acrylate, isomyristyl (meth)acrylate, lauroxypolyethylene glycol (meth)acrylate, lauryl (meth)acrylate, methoxydipropylene glycol (meth)acrylate, methoxytripropylene glycol (meth)acrylate, methoxypolyethylene glycol (meth)acrylate, methoxytriethylene glycol (meth)acrylate, morpholino (meth)acrylate, phenoxyethyl (meth)acrylate, 1,6-hexanediol (meth)acrylate, 2,2,3,3-tetrafluoropropyl (meth)acrylate, and silicone-containing (meth)acrylate.

The term "(meth)acrylate" refers to an acrylate or a methacrylate.

Among them, isobornyl acrylate and isomyristyl acrylate are preferred in the present invention.

The (meth)acryloyl group-containing monomer also improves physical properties of the photocurable liquid rubber composition after being cured. In other words, break strength (Tb), elongation at break (Eb), and adhesion strength can be enhanced, and hardness is reduced. In particular, break strength (Tb) and elongation at break (Eb) can be improved. In addition, incorporation of a (meth)acryloyl group-containing monomer reduces the viscosity of the photocurable liquid rubber composition before curing, which is suited for eliminating use of solvent.

The amount of (meth)acryloyl group-containing monomer, represented by a ratio by mass of photocurable liquid SBR to (meth)acryloyl group-containing monomer, is preferably 85:15 to 15:85, more preferably 75:25 to 40:60. When the total amount of photocurable liquid SBR and (meth)acryloyl group-containing monomer is regarded as 100 mass%, in the case where the amount of (meth)acryloyl group-containing monomer is 15 mass% or more, the viscosity of the photocurable liquid rubber composition can be effectively reduced, thereby facilitating the discharge in extrusion, etc. of the composition. Thus, application of an adhesive made of the composition onto a member such as a sealing material is facilitated. When the amount is 85 mass% or less, the viscosity of the composition is not excessively reduced, which is preferred.

When the compatibility between the liquid styrene-butadiene copolymer and the (meth)acryloyl group-containing monomer is excellent, curing reaction can readily proceed, and the cured product has high break strength, which is preferred. The compatibility therebetween can be evaluated by the integrated average transmittance (%) (at 23°C) of the photocurable liquid rubber composition measured over a wavelength range of 300 to 800 nm. When the integrated average transmittance is 20% or higher, the liquid styrene-butadiene copolymer and the (meth)acryloyl group-containing monomer present contained in the photocurable liquid rubber composition are considered to be in a good compatible state.

As used herein, the term "wavelength range of 300 to 800 nm" means to cover the visible-light wavelength range and also portions of the invisible-light wavelength range (near-IR and near-UV).

The photopolymerization initiator employed in the photocurable liquid rubber composition of the present invention will next be described. Examples of the photopolymerization initiator (also called photo-radical polymerization initiator) include intramolecular scission type initiators and hydrogen abstraction type initiators. Examples of intramolecular scission type initiators include benzoin derivatives, benzylketals [such as IRGACURE 651, a trade name, manufactured by CIBA SPECIALTY CHEMICALS Co., Ltd.], α-hydroxyacetophenones [such as DAROCUR 1173, IRGACURE 184 and IRGACURE 127, trade names, manufactured by CIBA SPECIALTY CHEMICALS Co., Ltd.], α-aminoacetophenones [such as IRGACURE 907 and IRGACURE 369, trade names, manufactured by CIBA SPECIALTY CHEMICALS Co., Ltd.], combinations of α-aminoacetophenones and thioxanthones (such as isopropylthioxanthone and diethylthioxanthone), and acylphosphine oxides [such as IRGACURE 819, a trade name, manufactured by CIBA SPECIALTY CHEMICALS Co., Ltd.]. Examples of hydrogen abstraction type initiators include combinations of benzophenones and amines and combinations of thioxanthones and amines. The initiator of the intramolecular scission type and the initiator of the hydrogen abstraction type may be used in combination. Among the above initiators, α-hydroxyacetophenones modified as oligomers and benzophenones modified with acrylates are preferable. Specific examples of the preferable initiator include oligo[2-hydroxy-2-methyl-1-[4-(1-methylvinyl)phenyl]propanone] [such as ESACURE KIP150, a trade name, manufactured by LAMBERTI S.p.A.], acrylated benzophenones [such as EBECRYL P136, a trade name, manufactured by DAICEL UCB Co., Ltd.], and imide acrylates.

As the photo-radical polymerization initiator, initiators other than the compounds described above such as 1-[4-(2-hydroxyethoxy)phenyl]-2-methyl-1-propan-1-one, 1-hydroxycyclohexyl phenyl ketone [such as IRGACURE 184, trade name, manufactured by CIBA SPECIALTY CHEMICALS Co., Ltd.], mixtures of 1-hydroxycyclohexyl phenyl ketone and benzophenone, 2,2-dimethoxy-1,2-diphenylethan-1-one, 2,4,6-trimethylbenzoylphenylphosphine oxide, 2,4,6-trimethylbenzoylphenylphenylethoxyphosphine oxide, 2-benzyl-2-dimethylamino-1-(4-morpholinophenyl)butanone-1, 2-hydroxy-2-methyl-1-phenylpropan-1-one, 2-methyl-1-[(4-methylthio)phenyl]-2-morpholinopropan-1-one, benzoyl methyl ether, benzoyl ethyl ether, benzoyl butyl ether, benzoyl isopropyl ether, bis(2,4,6-trimethylbenzoyl)phenylphosphine oxide, 2-hydroxy-2-methyl-[4-(1-methylvinyl)phenyl]propanol oligomers, mixtures of 2-hydroxy-2-methyl-[4-(1-methylvinyl)phenyl]propanol oligomers and 2-hydroxy-2-methyl-1-phenyl-1-propanone, isopropylthioxanthone, methyl o-benzoylbenzoate, and [4-(methylphenylthio)phenyl]phenylmethane may also be used.

The amount of photopolymerization initiator incorporated into the photocurable liquid rubber composition of the present invention is preferably 0.1 to 6 parts by mass based on the total amount (100 parts by mass) of the photocurable liquid SBR and the (meth)acryloyl group-containing monomer, more preferably 0.2 to 4 parts by mass, still more preferably 0.5 to 3 parts by mass.

In the photocurable composition of the present invention, oligomers having an end (meth)acrylate can be used in combination with or in place of the aforementioned (meth)acryloyl group-containing monomer. The viscosity of the photocurable composition can be adjusted by use of an oligomer having an end (meth)acrylate. In terms of physical properties, a decrease in hardness and increases in strength at break (Tb) and elongation at break (Eb) can be achieved. "An oligomer having an end (meth)acrylate " refers to an oligomer having an acryloyl group or a methacryloyl group at one or both ends. As the oligomer having an end (meth)acrylate, hydrocarbon-based oligomers, i.e., hydrogenated oligomers and hydrogenated oligomers having an end (meth)acrylate, are preferred from the standpoint of moisture permeability, weatherability, and heat resistance. The weight-average molecular weight of the oligomer having an end (meth)acrylate preferably falls within a range of 5,000 to 40,000. When the weight-average molecular weight falls within the range, advantages are exhibited in that the oligomer can be easily handled as a liquid material, and that the product obtained after being cured has a small hardness.

Examples of the oligomer having an end (meth)acrylate include polyester (meth)acrylate-based oligomers, epoxy (meth)acrylate-based oligomers, urethane (meth)acrylate-based oligomers and polyol (meth)acrylate-based oligomers. The polyester (meth)acrylate-based oligomer can be produced, for example, by forming a polyester oligomer having hydroxyl groups at both ends through condensation of a polybasic carboxylic acid and a polyhydric alcohol, followed by esterification of the hydroxyl groups at the ends of the formed oligomer with (meth)acrylic acid; or by forming an oligomer by addition of an alkylene oxide to a polybasic carboxylic acid, followed by esterification of hydroxyl group formed at the ends of the formed oligomer with (meth)acrylic acid. The epoxy (meth)acrylate oligomer can be produced, for example, by esterification of an epoxy resin of the bisphenol type or an epoxy resin of the novolak type having a relatively low molecular weight by the reaction of the oxirane ring in the resin with (meth)acrylic acid. The polyol (meth)acrylate-based oligomer can be produced by esterification of a hydroxyl group in a polyether polyol with (meth)acrylic acid. The urethane (meth)acrylate-based oligomer can be produced, for example, by forming a polyurethane oligomer by reaction of a polyether polyol or a polyester polyol with a polyisocyanate, followed by esterification of the formed polyurethane oligomer with (meth)acrylic acid.

The amount of oligomer having an end (meth)acrylate incorporated into the photocurable liquid rubber composition of the present invention is preferably 0 to 100 parts by mass based on the total amount (100 parts by mass) of the photocurable liquid SBR and the (meth)acryloyl group-containing monomer, more preferably 5 to 50 parts by mass. If desired, the (meth)acryloyl group-containing monomer and the oligomer having an end (meth)acrylate oligomer can be interchanged.

The photocurable liquid rubber composition of the present invention may further contain a stabilizer. Examples of the stabilizer include phenol-based antioxidants such as trietheylene glycol bis[3-(3-t-butyl-4-hydroxy-5-methylphenyl)propionate] [such as IRGANOX 245, a trade name, manufactured by CIBA SPECIALTY CHEMICALS Co., Ltd. and ADEKASTAB AO-70, a trade name, manufactured by ASAHI DENKA KOGYO Co., Ltd.] and 3,9-bis{2-[3-(3-t-butyl-4-hydroxy-5-methylphenyl)-propionyloxy]-1,1-dimethylethyl}-2,4,8,10-tetraoxaspiro[5.5]undecane [such as ADEKASTAB AO-80, a trade name, manufactured by ASAHI DENKA KOGYO Co., Ltd.].

The amount of the stabilizer incorporated into the photocurable liquid rubber composition of the present invention is preferably 0.1 to 5 parts by mass based on the total amount (100 parts by mass) of the photocurable liquid SBR and the (meth)acryloyl group-containing monomer, more preferably 0.5 to 3 parts by mass, still more preferably 0.5 to 2 parts by mass.

To the photocurable liquid rubber composition of the present invention, there may be added tackifiers for improving adhesion such as terpene resins, terpene phenol resins, coumarone resins, coumarone indene resins, petroleum-based hydrocarbons, and rosin derivatives, and coloring agents such as titanium black, so long as the effects of the present invention are not impaired.

Through irradiating the photocurable liquid rubber composition of the present invention with an active energy ray such as a UV ray or a visible laser beam, the composition can be cured to provide a cured product.

In the present invention, a UV ray is preferably employed for curing. Examples of the source of ultraviolet light include a xenon lamp, a low-pressure mercury lamp, a high-pressure mercury lamp, a metal halide lamp, and a microwave-type excimer lamp. The atmosphere in which irradiation with ultraviolet light is carried out is preferably an atmosphere of an inert gas such as nitrogen gas and carbon dioxide gas or an atmosphere having a decreased oxygen concentration. The irradiation for curing may be conducted under atmospheric conditions. The temperature of the irradiation atmosphere is generally 10 to 200°C.

The properties of the photo-cured photocurable liquid rubber composition may be stabilized by further irradiation with an active energy ray such as UV light or a visible laser beam, or by heating, after curing.

No particular limitation is imposed on the method for producing the photocurable liquid rubber composition of the present invention, and known production methods may be applied. The photocurable liquid rubber composition may be produced through, for example, kneading raw materials and optional additive components by means of a temperature-controllable mixer such as a single screw extruder, a twin screw extruder, a planetary mixer, a twin screw mixer, and a high-shear type mixer.

Meanwhile, after reaction between an end hydroxyl group of liquid SBR polyol and a functional group having a photocurable unsaturated hydrocarbon group, preferably, removal of solvent is not performed. Instead, removal of solvent is preferably performed after addition of the below-mentioned (meth)acryloyl group-containing monomer, since productivity of the photocurable liquid rubber composition is enhanced.

When the photocurable liquid rubber composition of the present invention is employed as an adhesive, the composition may be applied to a substrate (e.g., a substrate to be bonded) through any technique by use of a coating solution having a predetermined viscosity prepared from the composition which is optionally temperature-controlled. For example, there may be employed spraying a coating solution onto a substrate to be bonded; dipping a substrate to be bonded in the photocurable liquid rubber composition or a solution thereof; and coating a substrate to be bonded with the composition through gravure coating, roller coating, spin coating, reverse coating, bar coating, screen coating, blade coating, air-knife coating, dispensing, ink-jet coating, etc. After dipping of the substrate in the aforementioned photocurable liquid rubber composition or forming a coating layer on the substrate with the aforementioned photocurable liquid rubber composition through spraying or coating, the coated substrate is irradiated with an active energy ray, to thereby cure the photocurable liquid rubber composition layer, whereby a target cured product can be obtained.

According to the photocurable liquid rubber composition of the present invention, the viscosity of the rubber composition can be readily controlled without using solvent, and the cured product thereof exhibits high break strength.

### EXAMPLES

The present invention will next be described in more detail by way of examples, which should not be construed as limiting the invention thereto.

Number average molecular weight, weight average molecular weight, compatibility, break strength, and elongation at break were determined through the following procedures.

### (1) Number average molecular weight and weight average molecular weight

Number average molecular weight and weight average molecular weight (as reduced to polystyrene) were determined through GPC (Gel Permeation Chromatography).

### (2) Compatibility between liquid styrene-butadiene copolymer and (meth)acryloyl group-containing monomer

A photocurable liquid rubber composition sample was placed in a quartz cell (cell thickness: 1 cm), and the absorbance of the sample was measured by means of a spectrophotometer "Shimadzu UV-160" at room temperature (23°C) in a wavelength range of 300 to 800 nm. From the obtained data, the integrated average transmittance (%) (wavelength range: 300 to 800 nm) was calculated, and the compatibility was evaluated in accordance with the following ratings.

The case of an integrated average transmittance of ≥70%: OO (excellent compatibility)

The case of an integrated average transmittance of ≥40% and <70%: O (good compatibility)

The case of an integrated average transmittance of ≥20% and <40%: Δ (fair compatibility)

The case of an integrated average transmittance of <20%: X (bad compatibility)

### (3) Break strength and elongation at break

A dumbbell-form (No. 3) cured sample was tested in accordance with JIS K6251 (2004). The tensile stress at break (23°C) was employed as break strength (Tb, unit: MPa), and the elongation at break (23°C) was employed as elongation at break (Eb, unit: %).

### (4) Bonded styrene content of polymer

The bonded styrene content of a polymer sample was determined through a relative integral peak value obtained from a ¹H-NMR spectrum.

### (5) Microstructure of butadiene segment of a polymer sample (e.g., vinyl bond content)

Calculated through the IR method (Morero method).

### Copolymer Production Example 1

To cyclohexane (solvent) which had been sufficiently dehydrated, 1,3-(diisopropenyl)benzene (1 mol), triethylamine (2 mol), and sec-butyllithium (2 mol) were sequentially added. The mixture was stirred at 50°C for two hours, to thereby prepare a dilithium-type polymerization initiator.

To a polymerization reactor (capacity: 7 L) purged with argon, dehydrated/purified cyclohexane (1.90 kg), a 22.9-mass% solution (1.90 kg) of 1,3-butadiene monomer in hexane, a 20.0-mass% solution (0.900 kg) of styrene monomer in cyclohexane, and 1.6-mol/L solution (130.4 mL) of 2,2-bis(tetrahydrofuryl)propane (hereinafter abbreviated as "OOPS") in hexane were added. The above-prepared 0.5-mol/L dilithium-based initiator (108.0 mL) was added to the reactor, whereby polymerization was started.

While the polymerization reactor was heated to 50°C, polymerization was carried out for 1.5 hours. Then, a 1-mol/L solution (108.0 mL) of ethylene oxide in cyclohexane was added to the polymerization system, followed by stirring for two hours. Isopropyl alcohol (50 mL) was added thereto, whereby a polymer in the hexane solution was precipitated in isopropyl alcohol. The precipitated polymer was sufficiently dried, to thereby yield both-end-hydroxyl-group-terminated SBR (liquid SBR polyol A).

Subsequently, the sufficiently dried liquid SBR polyol A (100 g) was dissolved in toluene. While the solution was maintained at 70°C with stirring, 2-acryloyloxyethyl isocyanate (Karenzu AOI, product of Showa Denko K.K.) was slowly added dropwise. Then, di-n-butyltin dilaurate (DBTDL) (0.4 g) was added to the mixture, followed by stirring for four hours and drying. The amount of added 2-acryloyloxyethyl isocyanate was 2.24 g.

The thus-produced photocurable liquid SBR-A was found to have a bonded styrene content of 29 mass%, a vinyl bond content in butadiene segment of 65%, a number average molecular weight of 12,500, a weight average molecular weight of 16,000, and a molecular weight distribution factor of 1.28. The functional species was an acryloyl group, and the number of functional groups was 2 (i.e., both ends).

### Copolymer Production Example 2

To a polymerization reactor (capacity: 7 L) purged with argon, dehydrated/purified cyclohexane (1.90 kg), a 22.9-mass% solution (1.85 kg) of 1,3-butadiene monomer in hexane, a 20.0-mass% solution (1.15 kg) of styrene monomer in cyclohexane, and 1.6-mol/L solution (130.4 mL) of OOPS in hexane were added. The same 0.5-mol/L dilithium-based initiator (108.0 mL) as prepared in Copolymer Production Example 1 was added to the reactor, whereby polymerization was started.

While the polymerization reactor was heated to 50°C, polymerization was carried out for 1.5 hours. Then, a 1-mol/L solution (108.0 mL) of ethylene oxide in cyclohexane was added to the polymerization system, followed by stirring for two hours. Isopropyl alcohol (50 mL) was added thereto, whereby a polymer in the hexane solution was precipitated in isopropyl alcohol. The precipitated polymer was sufficiently dried, to thereby yield both-end-hydroxyl-group-terminated SBR (liquid SBR polyol B).

Subsequently, the sufficiently dried liquid SBR polyol B (100 g) was dissolved in toluene. While the solution was maintained at 70°C with stirring, 2-acryloyloxyethyl isocyanate (Karenzu AOI, product of Showa Denko K.K.) was slowly added dropwise. Then, di-n-butyltin dilaurate (DBTDL) (0.4 g) was added to the mixture, followed by stirring for four hours and drying. The amount of added 2-acryloyloxyethyl isocyanate was 2.35 g.

The thus-produced photocurable liquid SBR-B was found to have a bonded styrene content of 35 mass%, a vinyl bond content in butadiene segment of 60%, a number average molecular weight of 12,000, a weight average molecular weight of 15,000, and a molecular weight distribution factor of 1.25. The functional species was an acryloyl group, and the number of functional groups was 2 (i.e., both ends).

### Copolymer Production Example 3

To a polymerization reactor (capacity: 7 L) purged with argon, dehydrated/purified cyclohexane (2.20 kg), a 22.9-mass% solution (1.90 kg) of 1,3-butadiene monomer in hexane, a 20.0-mass% solution (1.00 kg) of styrene monomer in cyclohexane, and 1.6-mol/L solution (130.4 mL) of OOPS in hexane were added. The same 0.5-mol/L dilithium-based initiator (70 mL) as prepared in Copolymer Production Example 1 was added to the reactor, whereby polymerization was started.

While the polymerization reactor was heated to 50°C, polymerization was carried out for 1.5 hours. Then, a 1-mol/L solution (70 mL) of ethylene oxide in cyclohexane was added to the polymerization system, followed by stirring for two hours. Isopropyl alcohol (50 mL) was added thereto, whereby a polymer in the hexane solution was precipitated in isopropyl alcohol. The precipitated polymer was sufficiently dried, to thereby yield both-end-hydroxyl-group-terminated SBR (liquid SBR polyol C).

Subsequently, the sufficiently dried liquid SBR polyol C (100 g) was dissolved in toluene. While the solution was maintained at 70°C with stirring, 2-acryloyloxyethyl isocyanate (Karenzu AOI, product of Showa Denko K.K.) was slowly added dropwise. Then, di-n-butyltin dilaurate (DBTDL) (0.4 g) was added to the mixture, followed by stirring for four hours and drying. The amount of added 2-acryloyloxyethyl isocyanate was 1.63 g.

The thus-produced photocurable liquid SBR-C was found to have a bonded styrene content of 31 mass%, a vinyl bond content in butadiene segment of 61%, a number average molecular weight of 17,000, a weight average molecular weight of 20,000, and a molecular weight distribution factor of 1.18. The functional species was an acryloyl group, and the number of functional groups was 2 (i.e., both ends).

### Copolymer Production Example 4

To a polymerization reactor (capacity: 7 L) purged with argon, dehydrated/purified cyclohexane (2.20 kg), a 22.9-mass% solution (1.85 kg) of 1,3-butadiene monomer in hexane, a 20.0-mass% solution (1.15 kg) of styrene monomer in cyclohexane, and 1.6-mol/L solution (130.4 mL) of OOPS in hexane were added. The same 0.5-mol/L dilithium-based initiator (70 mL) as prepared in Copolymer Production Example 1 was added to the reactor, whereby polymerization was started.

While the polymerization reactor was heated to 50°C, polymerization was carried out for 1.5 hours. Then, a 1-mol/L solution (70 mL) of ethylene oxide in cyclohexane was added to the polymerization system, followed by stirring for two hours. Isopropyl alcohol (50 mL) was added thereto, whereby a polymer in the hexane solution was precipitated in isopropyl alcohol. The precipitated polymer was sufficiently dried, to thereby yield both-end-hydroxyl-group-terminated SBR (liquid SBR polyol D).

Subsequently, the sufficiently dried liquid SBR polyol D (100 g) was dissolved in toluene. While the solution was maintained at 40°C with stirring, 2-acryloyloxyethyl isocyanate (Karenzu AOI, product of Showa Denko K.K.) was slowly added dropwise. Then, di-n-butyltin dilaurate (DBTDL) (0.4 g) was added to the mixture, followed by stirring for four hours and drying. The amount of added 2-acryloyloxyethyl isocyanate was 1.64 g.

The thus-produced photocurable liquid SBR-D was found to have a bonded styrene content of 35 mass%, a vinyl bond content in butadiene segment of 60%, a number average molecular weight of 17,200, a weight average molecular weight of 21,500, and a molecular weight distribution factor of 1.25. The functional species was an acryloyl group, and the number of functional groups was 2 (i.e., both ends).

### Examples 1 to 13, and Comparative Examples 1 to 3

The aforementioned photocurable liquid SBR-A, B, C, and D, and other ingredients were mixed at proportions shown in Table 1 by means of a planetary mixer, to thereby produce 16 photocurable liquid rubber compositions of Examples 1 to 13 and Comparative Examples 1 to 3. The compatibility of each liquid rubber composition was evaluated by measuring the integrated average transmittance thereof. The composition was also formed into thin film having dimensions defined in the aforementioned measuring method, and the thin film was irradiated with an active energy ray, to thereby yield a cured product. A metal halide lamp was employed as a light source of the active energy ray, and irradiation was performed under the following conditions: nitrogen atmosphere, an illuminance of about 700 mW/cm² (wavelength: 365 nm), and integrated quantity of light of about 3,000 mJ/cm². The cured product was analyzed in terms of break strength and elongation at break through the aforementioned procedures. Table 1 shows the results.

The cured products of Comparative Examples 1 and 2 exhibited very poor break strength and elongation at break. Thus, determination of the integrated average transmittance of the corresponding compositions was omitted. The composition of Comparative Example 3 was not cured sufficiently. Thus, break strength and elongation at break were not measured.

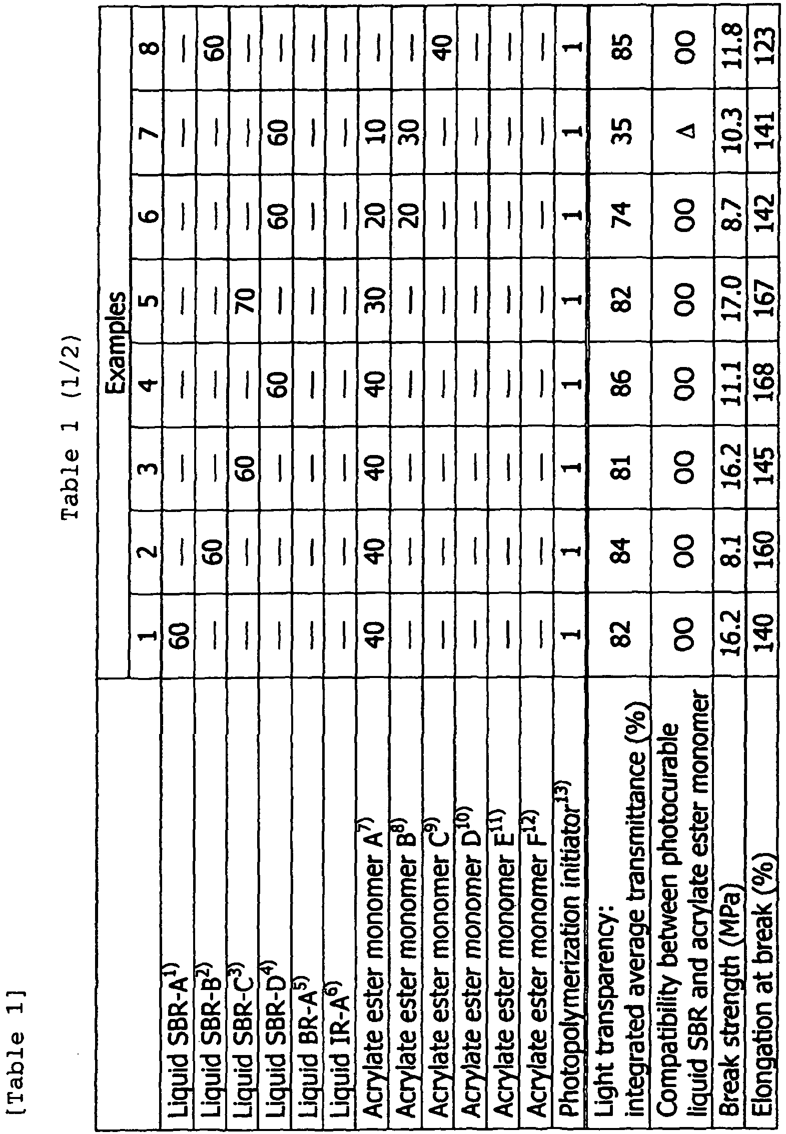

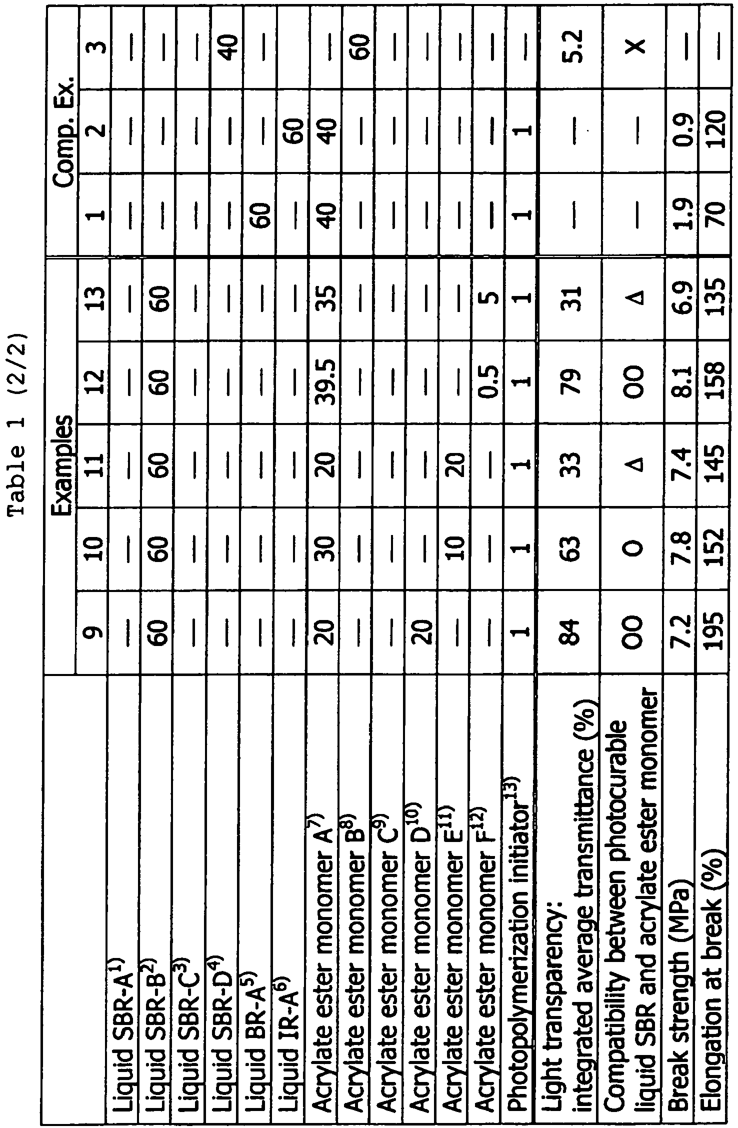

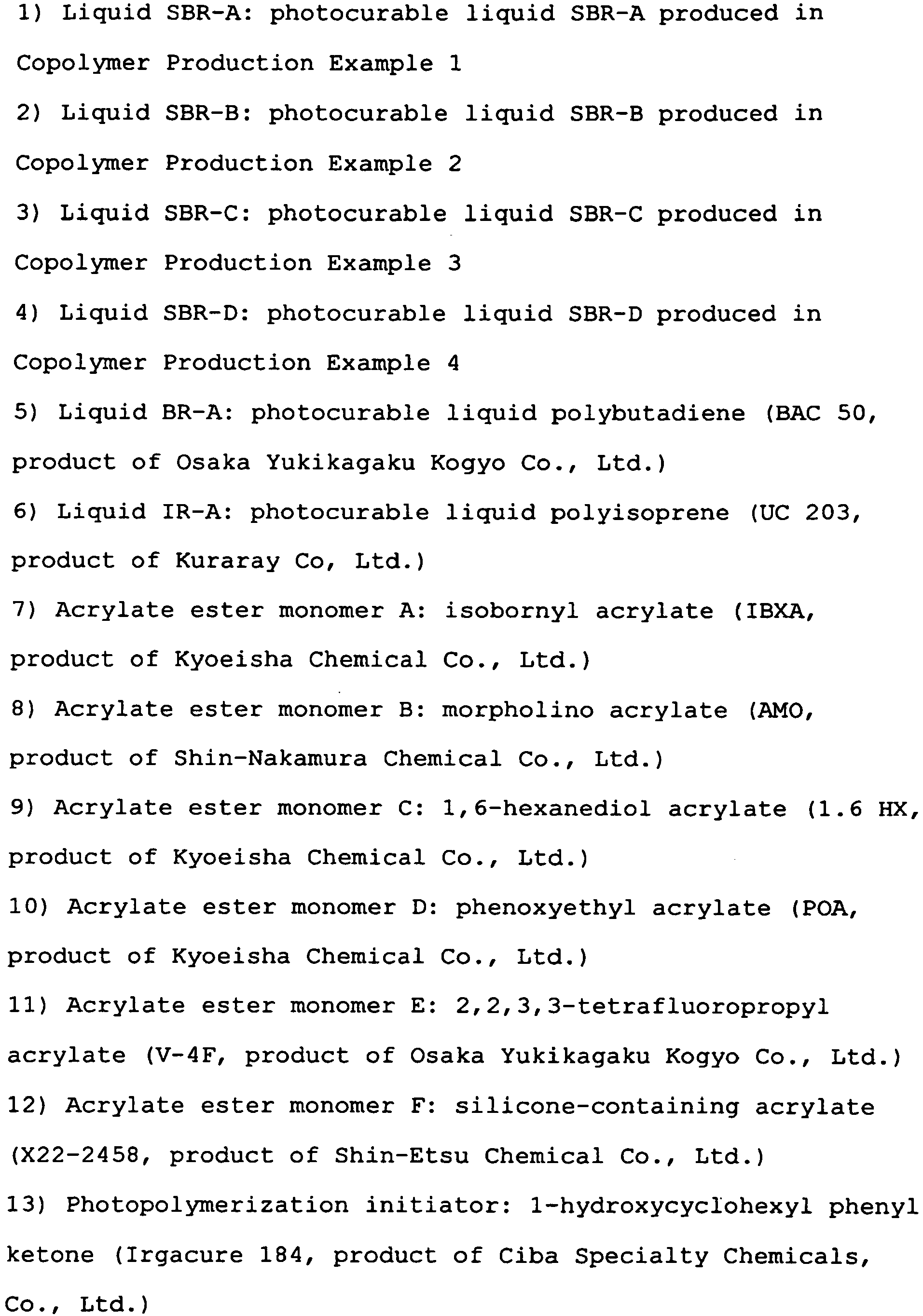

As is clear from Table 1, the photocurable liquid rubber compositions of Comparative Examples 1 to 3 exhibit considerably low break strength. In contrast, the photocurable liquid rubber compositions of Examples 1 to 13, falling within the scope of the invention, exhibit remarkably high break strength and elongation at break.

The combinations of photocurable modified liquid rubbers and (meth)acryloyl group-containing monomers employed in Examples 1 to 13 require no solvent. Thus, the viscosity of such a photocurable liquid rubber composition can be readily controlled.

### INDUSTRIAL APPLICABILITY

The photocurable liquid rubber composition of the present invention is suitably employed as adhesives for various purposes and as various members, for example, adhesives for astronautic members, robotic members, damping rubbers, and aseismic rubbers; adhesives for fiber reinforce materials for tires; and sealing materials (e.g., for gaskets in HDDs, seals for ink tanks, liquid crystal sealing, etc.).

## Claims

1. A photocurable liquid rubber composition comprising a liquid styrene-butadiene copolymer rubber having, at each end of a molecular chain thereof, a functional group having a photocurable unsaturated hydrocarbon group, a (meth)acryloyl group-containing monomer, and a photopolymerization initiator, where photocurable liquid rubber compositions produced by the following processes are not encompassed:
into a 7 liter polymerization reactor purged with argon in advance, dehydrated and purified cyclohexane, 2.00 kg of a 22.9% by mass hexane solution of 1,3-butadiene monomer, 0.765 kg of a 20.0% by mass cyclohexane solution of styrene monomer and a 1.6 moles/liter hexane solution of 2,2-bis(tetrahydrofuryl)propane (OOPS) were placed, and the polymerization was initiated by adding a 0.5 moles/liter solution of the dilithium polymerization initiator, the polymerization was conducted for 1.5 hours while the temperature of the polymerization reactor was being elevated to 50°C, after a 1 mole/liter cyclohexane solution of ethylene oxide was added, the resultant mixture was stirred for 2 hours and, then; 50 ml of isopropyl alcohol was added, the formed polymer was separated from the hexane solution by precipitation into isopropyl alcohol and sufficiently dried;
wherein the quantities of dehydrated and purified cyclohexane, hexane solution of OOPHS, dilithium polymerization initiator and cyclohexane solution of ethylene oxide are:
| Polymer polyol | B | C | D |
|---|---|---|---|
| dehydrated and purified cyclohexane/kg | 1.50 | 1.90 | 2.50 |
| hexane solution of OOPS/ml | 209.4 | 130.4 | 130.4 |
| dilithium polymerization initiator/ml | 223.5 | 108.0 | 54.0 |
| cyclohexane solution of ethylene oxide/ml | 220.4 | 108.0 | 53.8 |
after 120 g of one of Polymer polyols B, C and D was dissolved into 1 liter of sufficiently dehydrated and purified hexane, a solution of a catalyst which was prepared from nickel naphthenate, triethylaluminum and butadiene In relative amounts by mole of 1:3:3 in another vessel was added in an amount such that the amount of nickel was 1 mole per 1,000 moles of the butadiene unit in the copolymer solution, the hydrogenation was conducted in a tightly closed reactor by adding 27,580 hPa (400 psi) of hydrogen at 110°C for 4 hours, then, the catalyst residues were removed by extraction with a 3 N hydrochloric acid and further removed by centrifugal separation, the hydrogenated polymer polyol was separated by precipitation into isopropyl alcohol and sufficiently dried, the hydrogenated polymer polyol which had been sufficiently dried in an amount of 100 g was dissolved into cyclohexane, while the obtained solution was kept at 40°C and sufficiently stirred, 2-acryloyloxyethyl isocyanate (KARENZAOl, a trade name manufactured by SHOWA DENKO Co., Ltd.) was slowly added dropwise, and the resultant mixture was stirred for 4 hours, the formed product was separated by precipitation in isopropyl alcohol and dried, the amount of 2-acryloyloxyethyl isocyanate was 3.75 g for hydrogenated Polymer polyol B, 2.49 g for hydrogenated Polymer polyol C and 1.21 g for hydrogenated Polymer polyol D to produce photocurable liquid resins B, C and D, using photocurable liquid resins B, C and D photocurable compositions were obtained by mixing the compositions using a planetary mixer in accordance with the formulations shown
| | | | |
|---|---|---|---|
| Photocurable liquid resin B^{*6} (Mw: 7,100; MWD: 1.25) | 70 | - | - |
| Photocurable liquid resin C^{*6} (Mw: 14,500; MWD: 1.20) | - | 70 | - |
| Photocurable liquid resin D^{*6} (Mw: 25,300; MWD: 1.86) | - | - | 70 |
| Isobomyl acrylate ^{*2} | 30 | 30 | 30 |
| Photo-radical polymerization initiator 1 ^{*3} | 1 | 1 | 1 |
| | | | |
|---|---|---|---|
| ^{*2}: IBXA manufactured by OSAKA YUKIKAGAKU KOGYO Co., Ltd. ^{*3}: DAROCUR 1173 manufactured by CIBA SPECIALTY CHEMICALS Co., Ltd. (α-hydroxyacetophenone) ^{*6}: Mw: the weight-average molecular weight MWD: the molecular weight distribution. | | | |

2. A photocurable liquid rubber composition according to claim 1, wherein the photocurable unsaturated hydrocarbon group is an acryloyl group or a methacryloyl group.

3. A photocurable liquid rubber composition according to claim 1, wherein the liquid styrene-butadiene copolymer rubber is synthesized living anionic polymerization in the presence of a dilithium-based initiator.

4. A photocurable liquid rubber composition according to claim 1, wherein the composition contains the liquid styrene-butadiene copolymer rubber and the (meth)acryloyl group-containing monomer at a ratio by mass of 85:15 to 15:85.

5. A photocurable liquid rubber composition according to any one of claims 1 to 4, which exhibits an integrated average transmittance (%), as measured at 23°C and over a wavelength range of 300 to 800 nm, of 20% or higher.

6. A photocurable liquid rubber composition according to claim 1, wherein the functional groups at each end of a molecular chain are each -O-CO-NH-X¹, -CO-NH-R²-NH-CO-O-X² or -O-CO-NH-R⁶-NH-CO-O-X⁴; X¹, X² and X⁴ are a (meth)acryloyloxyalky group and R² and R⁸ are an alkylene group.

7. A photocurable liquid rubber composition according to claim 1, which is a UV-curable liquid rubber composition.

## Patentansprüche

1. Fotoaushärtbare flüssige Kautschukzusammensetzung, die einen flüssigen Styrol-Butadien-Copolymer-Kautschuk, der an jedem Ende der molekularen Kette davon eine funktionelle Gruppe aufweist, die eine fotoaushärtbare ungesättigte Kohlenwasserstoffgruppe aufweist, ein eine (Meth)acryloylgruppe enthaltendes Monomer und einen Fotopolymerisationsinitiator umfasst, wobei fotoaushärtbare flüssige Kautschukzusammensetzungen, die durch die folgenden Verfahren hergestellt werden, nicht eingeschlossen sind:
in einen 7-Liter-Polymerisationsreaktor, der vorher mit Argon ausgespült worden war, wurden dehydratisiertes und gereinigtes Cyclohexan, 2,00 kg einer Hexanlösung von 1,3-Butadienmonomer von 22,9 Masse-%, 0,765 kg einer Cyclohexanlösung von Styrolmonomer von 20,0 Masse-% und eine Hexanlösung von 2,2-Bis(tetrahydrofuryl)propan (OOPS) von 1,6 Mol/Liter eingegeben und die Polymerisation wurde durch Zugeben einer Lösung des Dilithiumpolymerisationsinitiators von 0,5 Mol/Liter ausgelöst, die Polymerisation wurde 1,5 Stunden lang durchgeführt, während die Temperatur des Polymerisationsreaktors auf 50 °C erhöht wurde, nachdem eine Cyclohexanlösung von Ethylenoxid von 1 Mol/Liter zugegeben worden war, die resultierende Mischung wurde 2 Stunden lang gerührt und dann wurden 50 ml Isopropylalkohol zugegeben, das gebildete Polymer wurde von der Hexanlösung durch Ausfällen in Isopropylalkohol abgetrennt und ausreichend getrocknet;
wobei die Mengen von dehydratisiertem und gereinigtem Cyclohexan, Hexanlösung von OOPS, Dilithiumpolymerisationsinitiator und Cyclohexanlösung von Ethylenoxid wie folgt sind:
| Polymerpolyol | B | C | D |
|---|---|---|---|
| Dehydratisiertes und gereinigtes Cyclohexan/kg | 1,50 | 1,90 | 2,50 |
| Hexanlösung von OOPS/ml | 209,4 | 130,4 | 130,4 |
| Dilithiumpolymerisationsinitiator/ml | 223,5 | 108,0 | 54,0 |
| Cyclohexanlösung von Ethylenoxid/ml | 220,4 | 108,0 | 53,8 |
nachdem 120 g eines von den Polymerpolyolen B, C und D in 1 Liter von ausreichend dehydratisiertem und gereinigtem Hexan gelöst worden waren, wurde eine Lösung eines Katalysators, der aus Nickelnaphthenat, Triethylaluminium und Butadien in relativen Molmengen von 1:3:3 in einem anderen Gefäß hergestellt worden war, in einer derartigen Menge zugegeben, dass die Menge an Nickel 1 Mol pro 1.000 Mole der Butadieneinheit in der Copolymerlösung betrug, die Hydrierung wurde in einem dicht geschlossenen Reaktor durch Zugeben von 27.580 hPa (400 psi) Wasserstoff bei 110 °C 4 Stunden lang durchgeführt, dann wurden die Katalysatorrückstände durch Extraktion mit einer 3 N Salzsäure und noch weiter durch Zentrifugaltrennung entfernt, das hydrierte Polymerpolyol wurde durch Ausfällen in Isopropylalkohol abgetrennt und ausreichend getrocknet, das hydrierte Polymerpolyol, das in einer Menge von 100 g ausreichend getrocknet worden war, wurde in Cyclohexan gelöst, während die erhaltene Lösung bei 40 °C gehalten und ausreichend gerührt wurde, wurde 2-Acryloyloxyethylisocyanat (KARENZAOI, Handelsname, von SHOWA DENKO Co, Ltd. hergestellt) langsam tropfenweise zugegeben und die resultierende Mischung wurde 4 Stunden lang gerührt, das gebildete Produkt wurde durch Ausfällen in Isopropylalkohol abgetrennt und getrocknet, die Menge an 2-Acryloyloxyethylisocyanat betrug 3,75 g bei hydriertem Polymerpolyol B, 2,49 g bei hydriertem Polymerpolyol C und 1,21 g bei hydriertem Polymerpolyol D, um fotoaushärtbare flüssige Harze B, C und D herzustellen, unter Anwendung der fotoaushärtbaren flüssigen Harze B, C und D wurden fotoaushärtbare Zusammensetzungen durch Mischen der Zusammensetzungen unter Anwendung eines Planetenmischers den unten gezeigten Formeln entsprechend erhalten
| | | | |
|---|---|---|---|
| fotoaushärtbares flüssiges Harz B^{*6} (MW: 7.100; MGV: 1,25) | 70 | - | - |
| fotoaushärtbares flüssiges Harz C^{*6} (MW: 14.500; MGV: 1,20) | - | 70 | - |
| fotoaushärtbares flüssiges Harz D^{*6} (MW: 25.300; MGV: 1,86) | - | - | 70 |
| Isobomylacrylat ^{*2} | 30 | 30 | 30 |
| Fotoradikalpolymerisationsinitiator 1^{*3} | 1 | 1 | 1 |
| | | | |
|---|---|---|---|
| ^{*2}: IBXA, von OSAKA YUKIKAGAKU KOGYO Co., Ltd. hergestellt ^{*3}: DAROCUR 1173, von CIBA SPECIALTY CHEMICALS Co., Ltd. hergestellt (α-Hydroxyacetophenon) ^{*6}: MW: das gewichtsdurchschnittliche Molekulargewicht MWD: die Molekulargewichtsverteilung | | | |

2. Fotoaushärtbare flüssige Kautschukzusammensetzung nach Anspruch 1, wobei die fotoaushärtbare ungesättigte Kohlenwasserstoffgruppe eine Acryloylgruppe oder eine Methyacryloylgruppe ist.

3. Fotoaushärtbare flüssige Kautschukzusammensetzung nach Anspruch 1, wobei der flüssige Styrol-Butadien-Copolymer-Kautschuk durch lebende anionische Polymerisation in Gegenwart eines Initiators auf Dilithiumbasis synthetisiert wird.

4. Fotoaushärtbare flüssige Kautschukzusammensetzung nach Anspruch 1, wobei die Zusammensetzung den flüssigen Styrol-Butadien-Copolymer-Kautschuk und das eine (Meth)acryloylgruppe enthaltende Monomer in einem Masseverhältnis von 85:15 bis 15:85 enthält.

5. Fotoaushärtbare flüssige Kautschukzusammensetzung nach einem der Ansprüche 1 bis 4, die einen integrierten durchschnittlichen Durchlässigkeitsgrad (%), wie bei 23 °C gemessen, und über einen Wellenlängenbereich von 300 bis 800 nm von 20 % oder höher aufweist.

6. Fotoaushärtbare flüssige Kautschukzusammensetzung nach Anspruch 1, wobei die funktionellen Gruppen an jedem Ende einer molekularen Kette jeweils -O-CO-NH-X¹, -CO-NH-R²-NH-CO-O-X² oder -O-CO-NH-R⁶-NH-CO-O-X⁴ sind; K¹, X² und X⁴ eine (Meth)acryloyloxyalkylgruppe sind und R² und R⁶ eine Alkylengruppe sind.

7. Fotoaushärtbare flüssige Kautschukzusammensetzung nach Anspruch 1, die eine UV-aushärtbare flüssige Kautschukzusammensetzung ist.

## Revendications

1. Composition de caoutchouc liquide photodurcissable comprenant un caoutchouc copolymère de styrène-butadiène liquide ayant, à chaque extrémité de sa chaîne moléculaire, un groupe fonctionnel ayant un groupe hydrocarbure insaturé photodurcissable, un monomère contenant un groupe (méth)acryloyle, et un initiateur de photopolymérisation, les compositions de caoutchouc liquides photodurcissables produites selon les procédés suivants n'étant pas englobées:
dans un réacteur de polymérisation de 7 litres purgé à l'avance à l'argon, on a placé du cyclohexane déshydraté et purifié, 2,00 kg d'une solution à 22,9 % en masse d'hexane de monomère de 1,3-butadiène, 0,765 kg d'une solution à 20,0 % en masse de cyclohexane de monomère styrène et une solution à 1,6 moles/litre d'hexane de 2,2-bis(tétrahydrofuryl)propane (OOPS), et on a initié la polymérisation en ajoutant une solution à 0,5 mole/litre de l'initiateur de polymérisation à base de dilithium, on a conduit la polymérisation durant 1,5 heure tout en élevant la température du réacteur de polymérisation jusqu'à 50°C après avoir ajouté une solution à 1 mole/litre de cyclohexane d'oxyde d'éthylène, on a agité durant 2 heures le mélange résultant et, ensuite; on a ajouté 50 ml d'alcool d'isopropyle, on a séparé le polymère formé de la solution d'hexane par précipitation dans de l'alcool d'isopropyle et on l'a séché suffisamment;
les quantités de cyclohexane déshydraté et purifié, de solution d'hexane d'OOPS, d'initiateur de polymérisation à base de dilithium et de la solution de cyclohexane d'oxyde d'éthylène étant:
| Polyol polymère | B | C | D |
|---|---|---|---|
| cyclohexane déshydraté et purifié/kg | 1,50 | 1,90 | 2,50 |
| solution d'hexane d'OOPS/ml | 209,4 | 130,4 | 130,4 |
| initiateur de polymérisation à base de dilithium/ml | 223,5 | 108,0 | 54,0 |
| solution de cyclohexane d'oxyde d'éthylène/ml | 220,4 | 108,0 | 53,8 |
après avoir dissous 120 g de l'un des polyols polymères B, C et D dans 1 litre d'hexane suffisamment déshydraté et purifié, on a ajouté une solution d'un catalyseur qui était préparé à partir de naphténate de nickel, de triéthylaluminium et de butadiène en des quantités relatives en mole de 1:3:3 dans un autre récipient en une quantité telle que la quantité de nickel était de 1 mole pour 1 000 moles d'unité butadiène dans la solution copolymère, on a conduit l'hydrogénation dans un réacteur hermétiquement fermé en ajoutant 27 580 hPa (400 lb/po²) d'hydrogène à 110°C durant 4 heures, ensuite, on a retiré les résidus de catalyseur par extraction avec de l'acide chlorhydrique 3 N et ensuite éliminé par séparation centrifuge, on a séparé le polyol polymère hydrogéné par précipitation dans de l'alcool d'isopropyle et suffisamment séché, on a dissous le polyol polymère hydrogéné qui avait été suffisamment séché en une quantité de 100 g dans du cyclohexane, tout en maintenant la solution obtenue à 40°C et suffisamment agité, on a lentement ajouté goutte à goutte de l'isocyanate de 2-acryloyloxyéthyle (KARENZAOI, une appellation commerciale proposée par SHOWA DENKO Co., Ltd.), et on a agité le mélange résultant durant 4 heures, on a séparé le produit formé par précipitation dans de l'alcool d'isopropyle et on l' a séché, la quantité d'isocyanate de 2-acryloyloxyéthyle était de 3,75 g pour le polyol polymère hydrogéné B, 2,49 g pour le polyol polymère hydrogéné C et 1,21 g pour le polyol polymère hydrogéné D afin de produire des résines liquides photodurcissables B, C et D, en utilisant les résines liquides photodurcissables B, C et D on a obtenu les compositions photodurcissables en mélangeant les compositions à l'aide d'un mélangeur planétaire selon les formulations présentées
| | | | |
|---|---|---|---|
| Résine liquide photodurcissable B*⁶ (Mw: 7 100, MWD: 1,25) | 70 | - | - |
| Résine liquide photodurcissable C*⁶ (Mw: 14 500; MWD: 1,20) | - | 70 | - |
| Résine liquide photodurcissable D*⁶ (Mw: 25 300; MWD: 1,86) | - | - | 70 |
| Acrylate d'isobomyle*² | 30 | 30 | 30 |
| Initiateur de polymérisation photo-radicalaire 1 *³ | 1 | 1 | 1 |
| | | | |
|---|---|---|---|
| *²: IBXA fabriquée par OSAKA YUKIKAGAKU KOGYO Co., Ltd. *³: DAROCUR 1173 fabriquée par CIBA SPECIALTY CHEMICALS Co., Ltd. (α-hydroxyacétophénone) *⁶: Mw: poids moléculaire moyen en poids MWD: distribution des poids moléculaires. | | | |

2. Composition de caoutchouc liquide photodurcissable selon la revendication 1, le groupe hydrocarbure insaturé photodurcissable étant un groupe acryloyle ou un groupe méthacryloyle.

3. Composition de caoutchouc liquide photodurcissable selon la revendication 1, dans laquelle le caoutchouc copolymère de styrène-butadiène liquide est synthétisé par polymérisation anionique vivante en présence d'un initiateur à base de dilithium.

4. Composition de caoutchouc liquide photodurcissable selon la revendication 1, la composition contenant le caoutchouc copolymère de styrène-butadiène liquide et le monomère contenant le groupe (méth)acryloyle sous un rapport en masse de 85:15 à 15:85.

5. Composition de caoutchouc liquide photodurcissable selon l'une quelconque des revendications 1 à 4, qui fait preuve d'une transmittance moyenne intégrée (%), telle que mesurée à 23°C et sur une plage de longueurs d'ondes de 300 à 800 nm, de 20 % ou plus.

6. Composition de caoutchouc liquide photodurcissable selon la revendication 1, les groupes fonctionnels à chaque extrémité d'une chaîne moléculaire étant chacun -O-CO-NH-X¹, -CO-NH-R²-NH-CO-O-X² ou -O-CO-NH-R⁶-NH-CO-O-X⁴; X¹, X² et X⁴ étant un groupe (méth)acryloyloxyalkyle et R² et R⁶ étant un groupe alkylène.

7. Composition de caoutchouc liquide photodurcissable selon la revendication 1, qui est une composition de caoutchouc liquide durcissable par rayonnement UV.
